Europäisches Patentamt

European Patent Office

Office européen des brevets

(11) Publication number: 0 378 359
A1

# EUROPEAN PATENT APPLICATION

(21) Application number: 90300230.1

(22) Date of filing: 09.01.90

(51) Int. Cl.5: B60J 1/00, B62D 31/02

(30) Priority: 10.01.89 AU 2210/89

(43) Date of publication of application:
18.07.90 Bulletin 90/29

(84) Designated Contracting States:
AT BE CH DE DK ES FR GB GR IT LI LU NL SE

(71) Applicant: JRA LIMITED
Cnr. Heathcote Road and Church Road
Moorebank New South Wales 2170(AU)

(72) Inventor: Modderman, Sigismund Matthews
30 Comet Street, Runcorn
Queensland 4113(AU)
Inventor: Eberl, Loreny
4 Webber Place, Kings Langley
New South Wales 2147(AU)

(74) Representative: Brown, John David et al
FORRESTER & BOEHMERT
Widenmayerstrasse 4/l
D-8000 München 22(DE)

(54) Glass mounting system.

(57) The invention provides a vehicle having frame members (1,2,3) joined such that a pane of glass (6) or window frame (13,16) may be firmly mounted directly on the frame members (1,2,3).

FIG.1

EP 0 378 359 A1

# GLASS MOUNTING SYSTEM

The present invention relates to the field of Glazing Structures and in particular an improved flush bonded glazing system for buses or such like vehicles.

To date, the glazing of buses, coaches and such like vehicles has been performed upon substantially complete coach work. This has been a natural concomitant of the philosophy that glazing is provided to a series of apertures in the coach work. The apertures in the coach work were provided by the body skin and the glazing mounted on the skin rather than the frame.

By virtue of the overlap of the window unit over the skin, or alternatively adjacent to it, and by means of a trim from another material, there is achieved a neat finish to the glazing and skin boundaries.

It will be appreciated that numerous advantages flow from a glazing structure bonded to the vehicle framework rather than finished body skin components. The following important features are evident:

The glazing may be fitted to the vehicle frame independently of any skin componentry such as roof, side, front and rear panels;

The glazing system enables the vehicle to be assembled using pre-finished (i.e. painted) skin components, thus potentially eliminating the need for a large paint booth during assembly;

The glazing structure provides structural rigidity to the vehicle frame, thus providing extra passenger safety by increasing the vehicle's crashworthiness and contributing to a reduction in overall vehicle weight.

## SUMMARY OF THE INVENTION

In one broad form there is provided a vehicle frame comprised of frame members adapted to receive at least one glazing unit and/or skin unit mounted directly thereto.

In another form of the invention there is provided a method of mounting glazing units directly to a vehicle frame work wherein

said vehicle frame work is provided with substantially coplanar frame work components such that the outer surfaces define plane or curved surfaces, and bonding said glazing units directly to said frame work by means of adhesive independently of any skin components mounted on said frame work.

In an embodiment invention the vehicle frame has along each side two horizontal rails extending substantially the length of the vehicle and a series of vertical pillars running between them. Near the roof line is a cant rail and at approximately the midway position is a waist rail.

The pillars and rails intersect to form apertures over which glazing units are attached. The rails and pillars are formed and joined such that their outside surface forms a plane surface, although curved surfaces are acceptable. A glazing unit, or units is adhesively bonded to the outside surfaces of the rails and pillars thereby covering the apertures.

The glazing unit may comprise either a pane of glass, the glass bonded directly to the frame or it may comprise a window frame in which glass is mounted. The frame is provided with complementary surfaces to the pillar and rail surfaces and these are adhesively bonded together.

## BRIEF DESCRIPTION OF THE DRAWINGS

In order that the nature of the invention may be better understood a preferred form thereof is hereunder described by way of reference to the accompanying drawings in which:

Figure one shows a glazed structure according to one embodiment of the invention;

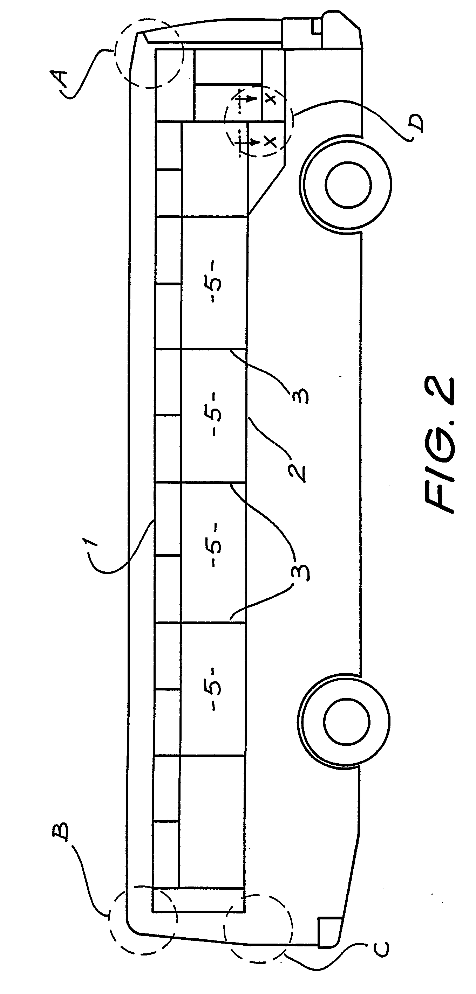

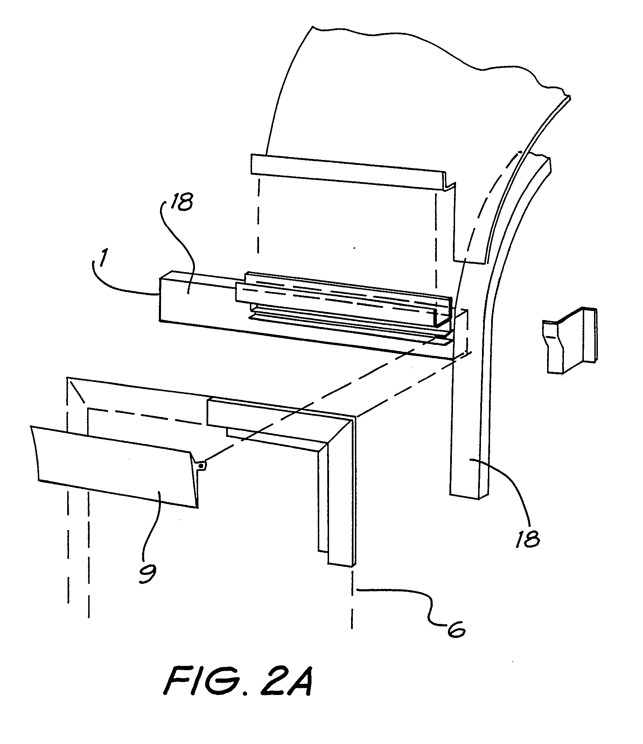

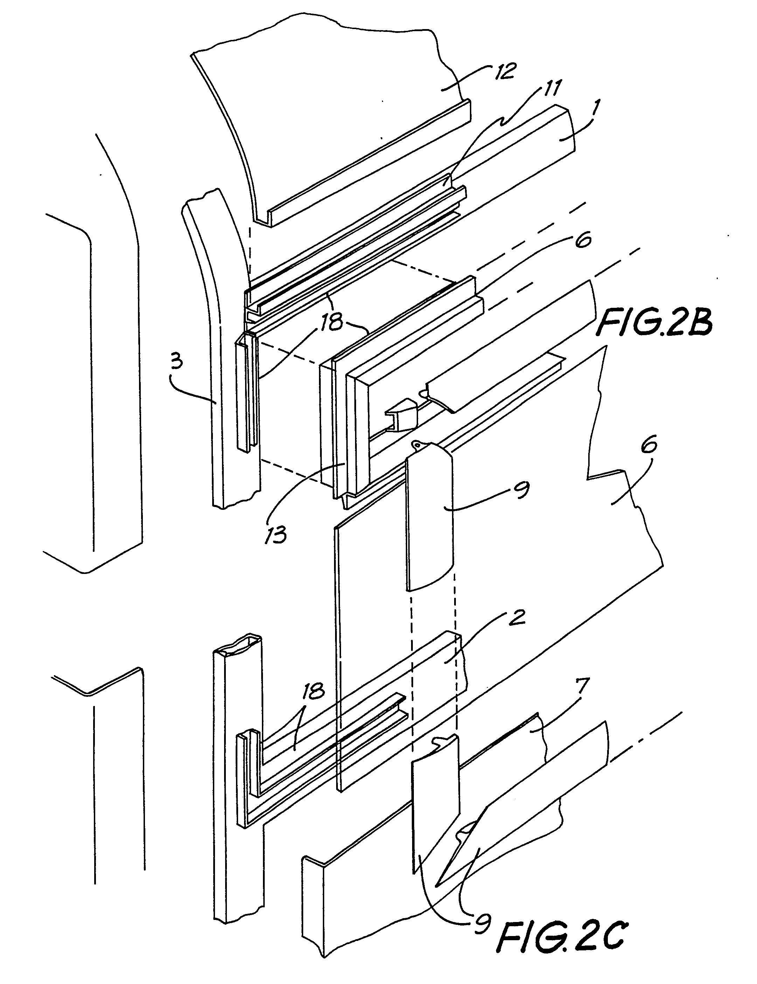

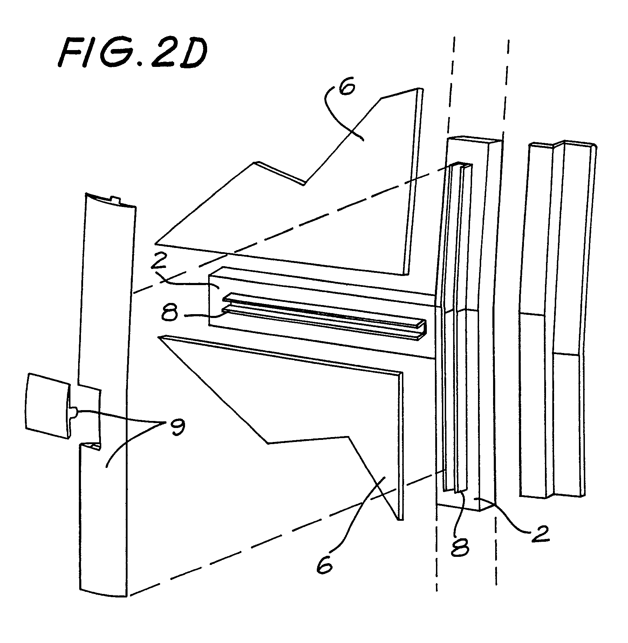

Figure two shows a similar bus indicating areas A, B, C, D shown in exploded view in corresponding figures 2A, 2B, 2C, 2D;

Figured three shows in detail the section through plane X-X of figure 2D;

Figure four shows in detail one embodiment of a slide window assembly;

Figure five shows in detail one embodiment of a driver's window assembly.

Figure six shows an exploded view of a prefered form of the slide window frame.

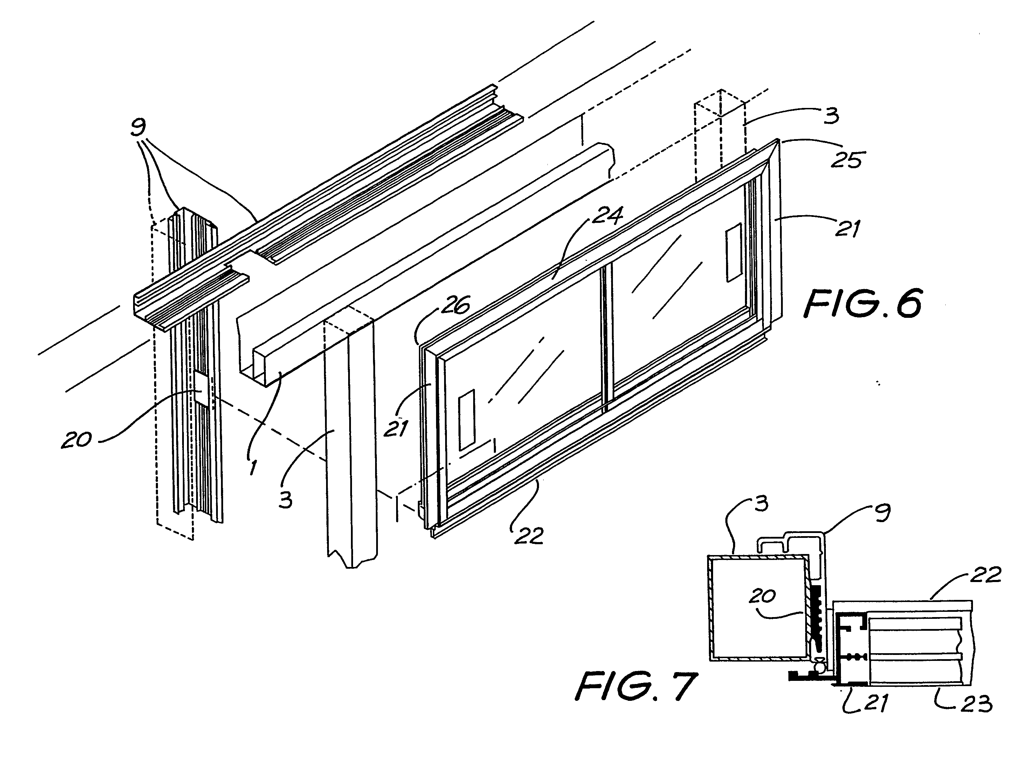

Figure seven is a cross-section detail view of past of the window of fig 6 when attached to the vehicle frame.

Figure eight is an exploded perspective view of the window frame of fig 6.

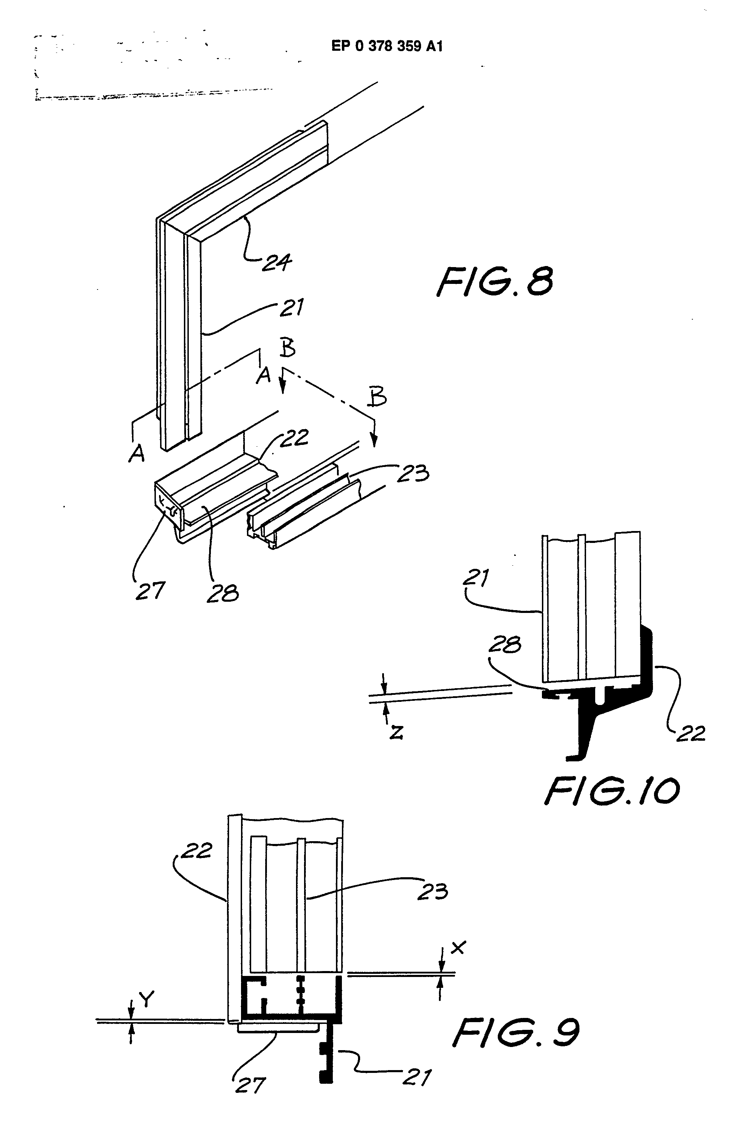

Figure nine is a vertical cross-section taken along line AA of fig 8.

Figure ten is a horizontal cross-section taken along line BB of fig 8 with the slide take 23 removed for clarity.

## DETAILED DESCRIPTION

In one preferred version the bus frame is provided with a cant rail (1), a waist rail (2) and a series of vertical pillars (3). The rails (1), (2) and pillars (3) are joined such that their outside surfaces (4) define an aperture (5) having a planar or curved surface. A glazing unit (6) is adhesively bonded to the outside surfaces of the pillars (3) and rails (1), (2) so as to sealably cove the aperture (5) defined.

The glazing units (6) only partially overlap the frame rails (1), (2) and pillars (3), thus allowing skin panels (7) to be bonded to the rails (1), (2) and an additional glazing unit to be bonded to each pillar (3).

Two glazing units (6) may be bonded to a single pillar (3) and any gap existing between the two filled with a proprietary caulk or, as is preferred, a trim base (8) may be provided on the centre of the pillars, and additionally on the rails. Upon completion of bonding of the glazing units (6) and skin panels (7) to the frame, trim pieces (9) are inserted into the trim base (8) thereby covering any joins (10). The trim (9) serves two functions, firstly it provides protection from U.V. radiation to the adhesive and secondly any manufacturing tolerances resulting in variations in glazing unit placement is hidden from sight.

In addition to a trim base (8), the cant rail (1) is provided with a roof/gutter connection (11) which is adapted to receive a roof skin (12) and divert water running off the roof from the glazing units.

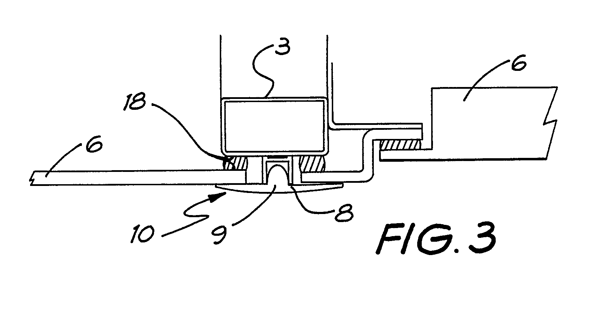

Three types of glazing units may be utilized with this invention. A first type glazing unit is merely a pane of glass moulded so as to complement the rails and pillars. The glass, since it is bonded directly to the frame, may extend over more than one aperture thus reducing handling and hence manufacturing costs.
This type is shown in figures 2D and 3.

A second type, as in figure 2C, comprises a glass pane fixedly mounted in a window frame (13) and this window frame is subsequently bonded to the vehicle frame by means of surface 18 to the frame rails.

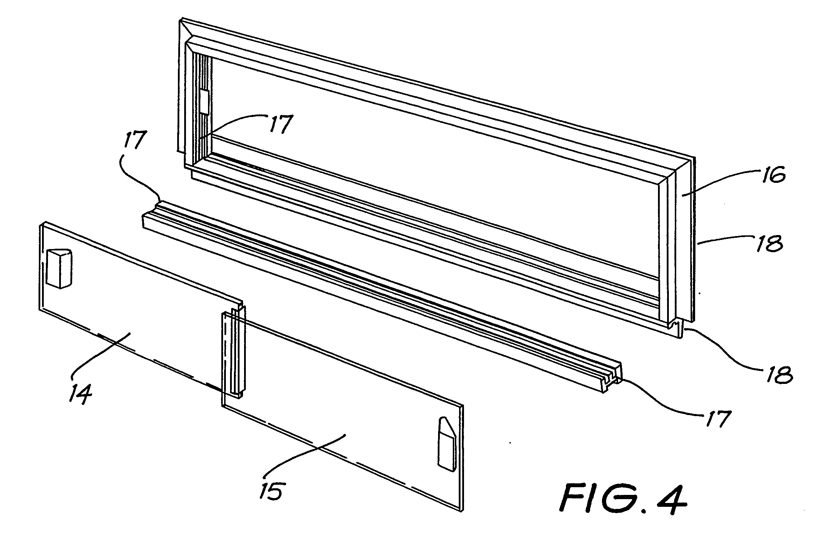

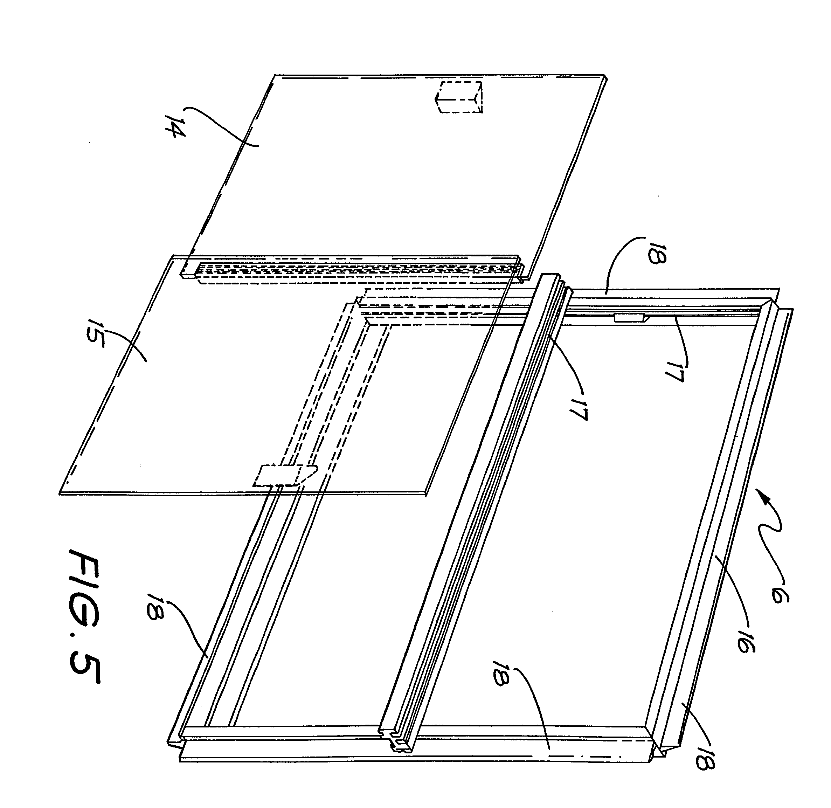

A third type, as in figure 4 and 5, comprises a window frame (16) in which two glass sheets (14), (15) may slide. The frame is provided with tracks (17) for the glass to slide in and again surfaces (18) are provided to bond the window frame to the vehicle frame.

A prefered construction of the third type of glazing unit is shown in figs 6 to 10. The window frame is constructed of an upper frame member 24, two side members 21 and a lower frame member 22.

The upper member 24 and two side members 21 are welded together at corners 25 and 26, but the lower frame member 22 is joined to the side members 21 using a flexible elastomeric material which allows the lower frame member 22 to flex relative to side members 21.

The lower frame member 22 has an end cap 27 at each end and the side members 21 are inserted inside this end cap 27, as shown in fig 9. The side rails 21 are spaced vertically from the horizontal internal surface 28 of the lower member 22, indicated by gap Z. The side rails 21 are also spaced longitudinally from the end caps 27, leaving a gap Y. Both gap Y and gap Z are filled with a flexible elastometric material to seal against water ingress and also to secure the lower member to the side rails 21. The service rail 23, upon which the glass panes slide is also cut short such that a gap X exists between its ends and the respective side rails 21.

The length of the lower member 22 is such that, when inserted into the bus frame, there is an interference fit which places the lower member 22 in compression. This enhances durability of the joint and prevents water ingress due to joint failure. A special packing piece 4 is located behind the trim 9 to aid compression of the lower frame rail 22.

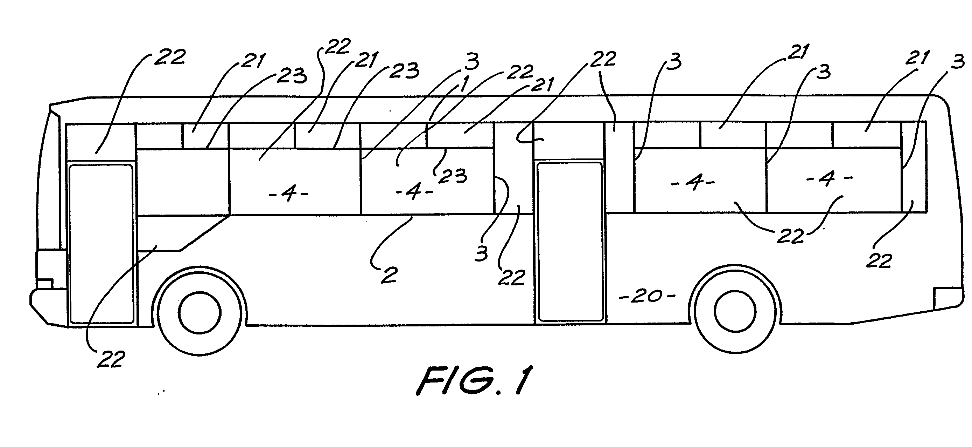

In a preferred construction (refer to fig 1) each aperture (5) is provided with two glazing units. A first glazing unit (21) of the third type is bonded to the cant rail (1) and the two pillars (3). A second glazing (22) unit either of the first or second type is then bonded to the waist rail (2), the remainder of the two pillars and a bottom side surface (23) of the first glazing unit. Alternatively the second glazing unit (22), when comprising only a glass sheet may span more than one aperture with the upper portions each covered with a first glazing unit of the third type.

It will be obvious that many modifications or variations may be made to the present invention by those skilled in the art without departing from the scope or spirit of the invention.

The features disclosed in the foregoing description, in the following claims and/or in the accompanying drawings may, both separately and in any combination thereof, be material for realising the invention in diverse forms thereof.

## Claims

1. A vehicle frame comprised of frame members adapted to receive at least one glazing unit and/or skin unit mounted directly thereto.

2. The vehicle frame of claim 1, wherein the, or each, glazing unit is bonded by adhesive to the frame members.

3. The vehicle frame of claim 1 or claim 2 wherein the, or each, glazing unit is a pane of glass.

4. The vehicle frame of claim 1 or claim 2 wherein the, or each, glazing unit comprises at least one pane of glass mounted in a window frame, the window frame mounted directly on the frame members.

5. The vehicle frame of any one of claims 1 to 4 wherein the frame members comprise a plurality of generally horizontal rails and a plurality of generally vertical pillars intersecting said rails.

6. The vehicle frame of claim 5 wherein intersecting rails and pillars define at leat one apperture, the, or each, apperture covered by at least part of a glazing unit.

7. The vehicle frame of claim 6 wherein each glazing unit extends over two or more appertures.

8. The vehicle frame of any one of claims 5 to 7 wherein two or more glazing units cover each apperture.

9. A vehicle including a vehicle frame of any one of claims 1 to 8.

10. A vehicle frame substantially as herein described with reference to the drawings.

FIG.1

Neu eingereicht / Ne
Nouvellement dé

EP 0 378 359 A1

B                                                                    A

1

-5-        -5-        -5-        -5-

3          2          3

C                                                    D

## FIG. 2

FIG. 2A

*FIG.2B*

*FIG.2C*

# FIG.2D

*FIG.3*

FIG.4

FIG. 5

FIG.6

FIG. 7

EP 0 378 359 A1

*FIG.8*

*FIG.10*

*FIG.9*

| | **DOCUMENTS CONSIDERED TO BE RELEVANT** | | EP 90300230.1 |
|---|---|---|---|
| Category | Citation of document with indication, where appropriate, of relevant passages | Relevant to claim | CLASSIFICATION OF THE APPLICATION (Int Cl⁵) |
| Y | <u>AT - B - 374 753</u><br>(SCHWEIZERISCHE ALUMINIUM AG)<br>   * Fig. 1,2; page 4, lines<br>      19-46 *<br>   -- | 1-10 | B 60 J   1/00<br>B 62 D 31/02 |
| Y | <u>US - A - 4 219 230</u><br>(LAPINE)<br>   * Fig. 1,2; column 2, line<br>      63 - column 3, line 17 *<br>   -- | 1-10 | |
| A | <u>EP - A1 - 0 009 246</u><br>(MASCHINENFABRIK AUGSBURG-<br>NÜRNBERG AKTIENGESELLSCHAFT)<br>   * Fig. 1-3 *<br>   ---- | 1-10 | |
| | | | **TECHNICAL FIELDS SEARCHED (Int Cl⁵)**<br><br>B 60 J<br>B 62 D<br>B 61 D |

The present search report has been drawn up for all claims

| Place of search | Date of completion of the search | Examiner |
|---|---|---|
| VIENNA | 26-03-1990 | WIDHALM |

## DOCUMENTS CONSIDERED TO BE RELEVANT

EP 90300229.3

| Category | Citation of document with indication, where appropriate, of relevant passages | Relevant to claim | CLASSIFICATION OF THE APPLICATION (Int. Cl⁵) |
|---|---|---|---|
| A | US - A - 4 721 712 (KADIN) <br> * Examples 6,7,8; abstract * | 1,9,10 | C 07 D 405/04 <br> C 07 D 405/14 <br> C 07 D 409/04 <br> C 07 D 409/14 |
| D,A | US - A - 4 690 943 (KADIN) <br> * Example 4; claim 1 * | 1 | C 07 D 417/04 <br> C 07 D 417/14 <br> A 61 K 31/40 <br> A 61 K 31/425 |
| D,A | US - A - 4 569 942 (KADIN) <br> * Example 5; claim 1 * | 1 | |
| D,A | US - A - 4 556 672 (KADIN) <br> * Example 4; claim 1 * | 1 | |
| P,A | EP - B1 - 0 153 818 (PFIZER) <br> * Formula I; example 7 * | 1 | |

TECHNICAL FIELDS SEARCHED (Int. Cl⁵)

C 07 D 405/00
C 07 D 409/00
C 07 D 417/00

The present search report has been drawn up for all claims

| Place of search | Date of completion of the search | Examiner |
|---|---|---|
| VIENNA | 07-03-1990 | HAMMER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82